# EUROPEAN PATENT SPECIFICATION

(11) **EP 1 570 945 B1**
(45) Date of publication and mention of the grant of the patent: **30.03.2011**
(21) Application number: 05101573.3
(22) Date of filing: 01.03.2005
(51) Int. Cl.: B23P 19/00, B25H 3/00, E05D 11/00, B65D 73/02

(54) **Hinge loading device**
Beschickungsvorrichtung für Scharniere
Dispositif de chargement pour charnières

(30) Priority: 02.03.2004 IT TV20040025
(43) Date of publication of application: 07.09.2005
(73) Proprietor: OTLAV SpA, 31025 Santa Lucia di Piave (TV) (IT)
(72) Inventor: SOLDERA, Giancarlo, 31040, NERVESA DELLA BATTAGLIA TV (IT)
(74) Representative: Modiano, Micaela Nadia

(56) References cited:
- EP-A- 0 623 418
- DE-A1- 2 207 135
- DE-U1- 7 705 991
- GB-A- 2 023 216
- US-A- 5 927 491

## Description

The present invention relates to an assembly of a loading device, preferably in so-called boring and hinge inserting machines, and a plurality of male or female hinges of the type that comprises a body that is associated with a plate provided with at least one hole and a pin for connection to a door.

Such machines allow to mate said hinges directly and automatically at the edge of a door.

Currently, it is known to load the boring and hinge inserting machines by using, for each machine, an individual worker, who positions the hinges one by one at a feeder provided in the machine; this working method requires a certain time in order to complete loading of the hinges.

DE 22 07 135 discloses a method and containment support device for grouping together furniture hinges for transport and loading thereof into a storage element of a fixing machine. The containment support device is constituted by a cord or metal wire that may be inserted into a hole of each of the hinges to group together a plurality of such hinges, and the containment support device may be extracted when the hinges are inserted into the storage element of the fixing machine.

The aim of the present invention is to solve the described technical problems, eliminating the drawbacks of the cited known art, by providing a device that allows to feed continuously and easily a series of hinges at a machine that is adapted to subsequently process them, such as for example a so-called boring and hinge inserting machine.

Within this aim, an object of the present invention is to provide a device that allows to feed easily the machine despite a high degree of automation thereof and therefore despite a large number of hinges required for successive processes.

Another object is to provide a device that allows to feed such machines precisely and with simple operations.

Another object is to provide a device that allows to feed the boring and hinge inserting machine in an optimum manner.

Another object is to provide a device that is structurally simple and has low manufacturing costs.

In accordance with the invention, there is provided an assembly of a loading device and a plurality of male or female hinges as defined in claim 1.

Further characteristics and advantages of the present invention will become better apparent from the following detailed description of a particular but not exclusive embodiment thereof, illustrated by way of non-limiting example in the accompanying drawings, wherein:

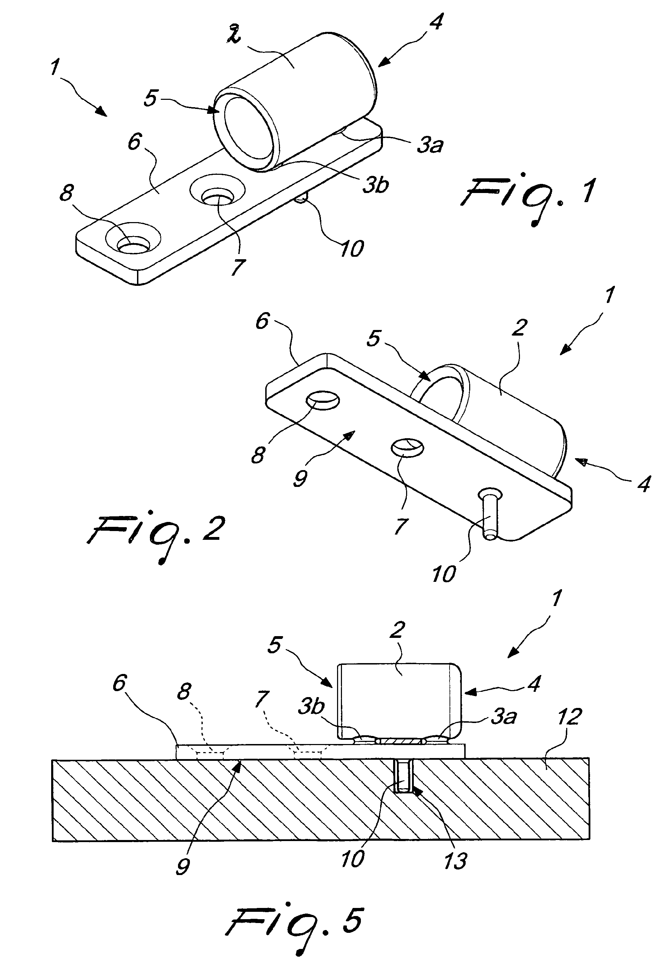

Figure 1 is a first top perspective view of the hinge;
Figure 2 is a bottom perspective view of the hinge;

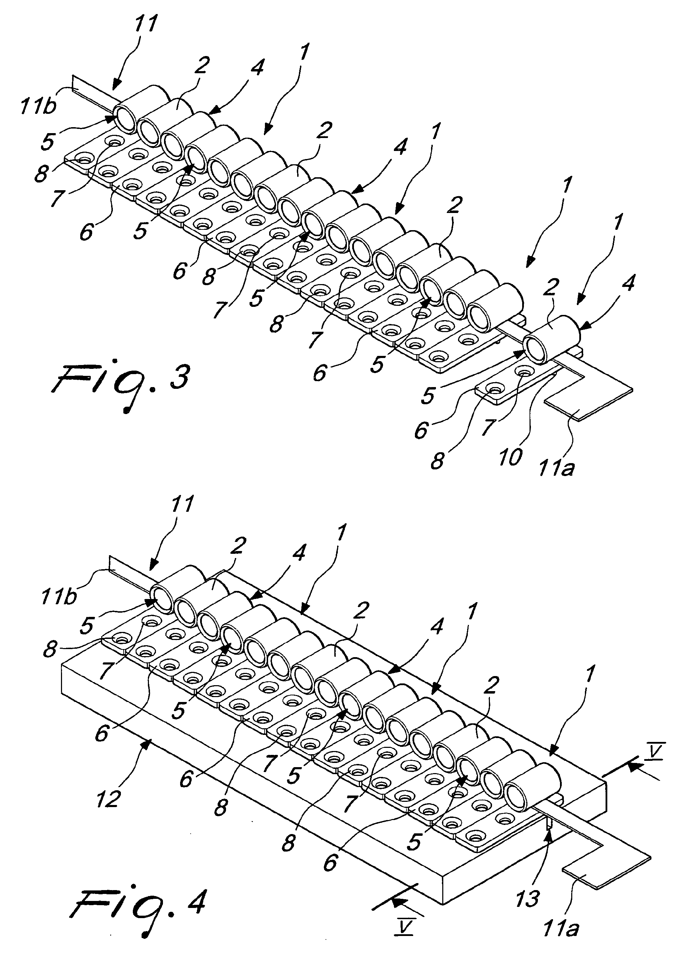

Figure 3 is a view of a series of hinges with which the band is associated;
Figure 4 is a view of the association of the band with the hinges and the support;
Figure 5 is a sectional view taken along the line V-V of Figure 4;

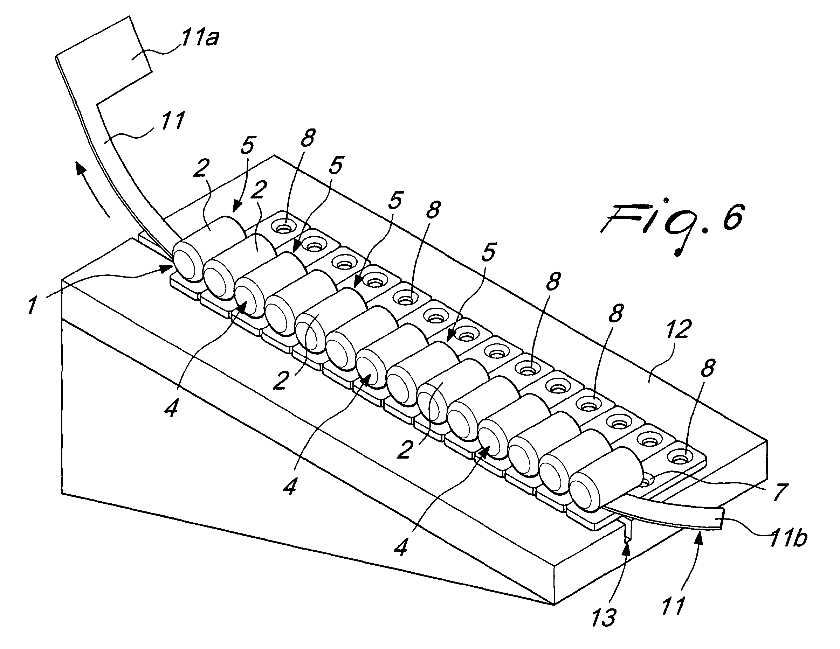

Figure 6 is a side perspective view of the arrangement of the assembly constituted by bands, hinges and support on an inclined plane for feeding to the feeder of the boring and hinge inserting machine.

With reference to the figures, the reference numeral 1 designates a hinge, which, merely for the sake of illustration requirements, is of the female type comprising a body 2 that is preferably cylindrical and internally axially and partially hollow, so as to allow to accommodate the pivot of a male hinge.

The hinge 1 may of course be of the male type and therefore again comprise a body from which a pivoting pin protrudes axially.

The body 2 is in any case connected to a plate 6 at selected welding points, such as a pair of bridges 3a and 3b that protrude from it radially at the same generatrix and proximate to a closed end 4 and an open end 5 of the body 2.

The plate 6 has a preferably rectangular plan shape with rounded corners, and a first hole 7 and a second hole 8 are formed for example in it along a longitudinal axis and are adapted to allow its connection for example to the edge of a door.

A pin 10 can protrude at the lower surface 9 of the plate 6, which is therefore directed away from the surface for connection to the body 2 by way of the bridges 3a and 3b, approximately at the same longitudinal axis as said first and second holes and preferably in the intermediate region between the bridges 3a and 3b; such pin is used during connection to said door as an element for centering and/or locking with respect to said door.

The loading device is constituted by at least one band, designated by the reference numeral 11, which has the particularity that it can be positioned detachably at a receptacle or interspace provided between the lateral surface of the body 2 and the plate 6 in the region affected by the bridges 3a and 3b.

The band 11, which can be made for example of paper and/or cardboard and/or plastic material, has a chosen thickness and therefore can be inserted at said interspace so as to allow to arrange a plurality of hinges side-by-side.

This allows quick and easy insertion of the band 11, which can have, at one end, preferably an element that is adapted to facilitate removal of the band, such as a tab 11a. Such element may be constituted for example also by one or more metal staples or by a thicker region of the end of the band 11, or may also be omitted. Advantageously, on the opposite side the band can have an end 11b that is conveniently obtained with an inclined cut, in order to facilitate its insertion in the interspace provided between the body 2 and the plate 6 of the interconnection region of the bridges 3a and 3b.

Once the band has been inserted and therefore a chosen number of hinges has been mutually associated, it is possible to arrange the sequence side-by-side hinges at a support 12 that is provided proximate to the feed of the boring and hinge inserting machine and is longitudinally provided with a slot 13 in which it is possible to slidingly associate the pin 10 that protrudes from the lower surface 9 of the plate 6.

By doing so, it is sufficient for the operator to extract the band 11 and allow the hinges to slide by gravity at the feeder of the machine.

The operator may further already preset a chosen series of hinges with the band associated therewith, so as to simply position each series at the gravity feed of the machine.

It has thus been found that the invention has achieved the intended aim and objects, a device having been provided which allows to mutually associate a plurality of hinges by arranging them side-by-side and ready to be all inserted together in the feeder of the boring and hinge inserting machine.

The illustrated solution is further very simple, since the band is quick and easy to apply.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An assembly of a loading device, particularly in so-called boring and hinge inserting machines, and a plurality of male or female hinges, wherein the loading device removably supports the plurality of male or female hinges (1) which comprise a body (2) that is associated with a plate (6) provided with at least one hole (7, 8) and an optional pin (10) for connection to a door, said loading device being constituted by at least one band (11) that passes at a receptacle provided between said body (2) and said plate (6) and can be removed from it, said at least one band (11) being positioned detachably, for each one of said plurality of hinges (1), at an interspace formed between the lateral surface of said body (2) and said plate (6) in a region between two welding spots that connect said body (2) to said plate (6) and that form a pair of bridges (3a, 3b) that protrude radially from said body (2) at a same generatrix and proximate to the closed and open ends of said body (2), said at least one band (11) having a rectangular cross-section at said interspace between said bridges (3a,3b) and said body (2) and said plate (6).

2. The loading device supporting the hinges according to claim 1, **characterized in that** said at least one band (11) is inserted at said interspace so as to arrange side-by-side a plurality of said hinges (1), which are thus arranged sequentially with respect to each other.

3. The loading device supporting the hinges according to claim 1, **characterized in that** said at least one band (11) is made of paper and/or cardboard and/or plastic material.

4. The loading device supporting the hinges according to claim 1, **characterized in that** said at least one band (11) has, at one end, an element (11a) that is adapted to facilitate its extraction, such as a tab and/or one or more metal staples or a thicker region of the material.

5. The loading device supporting the hinges according to claim 1, **characterized in that** said at least one band (11) has, at one end, an inclined cut (11b) that is adapted to facilitate its insertion in said interspace provided between said body (2) and said plate (6) in the region of mutual connection.

## Patentansprüche

1. Anordnung aus einer Beschickungsvorrichtung, insbesondere in so genannten Maschinen zum Bohren und Einführen von Scharnieren, und einer Mehrzahl von männlichen oder weiblichen Scharnierteilen, wobei die Beschickungsvorrichtung die Mehrzahl der männlichen oder weiblichen Scharnierteile (1) lösbar stützt, die einen Körper (2) umfassen, der mit einer Platte (6) verbunden ist, die mit wenigstens einem Loch (7, 8) und einem optionalen Stift (10) zur Verbindung mit einer Tür ausgestattet ist, wobei die Beschickungsvorrichtung durch wenigstens ein Band (11) gebildet wird, das durch eine Aufnahme verläuft, die zwischen dem Körper (2) und der Platte (6) vorgesehen ist, und aus der es entfernt werden kann, wobei das wenigstens eine Band (11) für jedes der Mehrzahl von Scharnierteilen (1) lösbar in einem Zwischenraum positioniert ist, der zwischen der seitlichen Oberfläche des Körpers (2) und der Platte (6) in einer Region zwischen zwei Schweißpunkten gebildet ist, die den Körper (2) mit der Platte (6) verbinden und ein Paar Brücken (3a, 3b) bilden, die von dem Körper (2) radial entlang der gleichen Mantellinie und benachbart zu dem geschlossenen und dem offenen Ende des Körpers (2) hervorstehen, wobei das wenigstens eine Band (11) einen rechtwinkeligen Querschnitt bei dem Zwischenraum zwischen den Brücken (3a, 3b) und dem Körper (2) und der Platte (6) aufweist.

2. Beschickungsvorrichtung, die Scharnierteile stützt, nach Anspruch 1, **dadurch gekennzeichnet, dass** das wenigstens eine Band (11) in den Zwischenraum eingeführt ist, um eine Mehrzahl der Scharnierteile (1) Seite an Seite anzuordnen, die somit aufeinander folgend angeordnet sind.

3. Beschickungsvorrichtung, die Scharnierteile stützt, nach Anspruch 1, **dadurch gekennzeichnet, dass** das wenigstens eine Band (11) aus Papier und/oder Pappe und/oder Plastikmaterial besteht.

4. Beschickungsvorrichtung, die Scharnierteile stützt, nach Anspruch 1, **dadurch gekennzeichnet, dass** das wenigstens eine Band (11) an einem Ende ein Element (11 a) aufweist, das angepasst ist, um sein Herausziehen zu ermöglichen, wie beispielsweise ein Streifen und/oder mehrere Metallkrampen oder eine dickere Region des Materials.

5. Beschickungsvorrichtung, die Scharnierteile stützt, nach Anspruch 1, **dadurch gekennzeichnet, dass** das wenigstens eine Band (11) an einem Ende einen geneigten Zuschnitt (11b) aufweist, der angepasst ist, die Einführung in den Zwischenraum zu ermöglichten, der zwischen dem Körper (2) und der Platte (6) im Bereich der gegenseitigen Befestigung bereitgestellt ist.

## Revendications

1. Assemblage formé d'un dispositif de chargement, en particulier dans ce que l'on appelle des machines d'alésage et d'insertion de charnières, et d'une pluralité de charnières mâles ou femelles, dans lequel le dispositif de chargement supporte de manière amovible la pluralité de charnières mâles ou femelles (1) qui comprennent un corps (2) qui est associé à une plaque (6) pourvue d'au moins un orifice (7, 8) et d'une broche facultative (10) pour raccordement à une porte, ledit dispositif de chargement étant constitué d'au moins une bande (11) qui passe dans un réceptacle ménagé entre ledit corps (2) et ladite plaque (6) et peut en être retirée, ladite au moins une bande (11) étant positionnée de manière amovible, pour chacune de ladite pluralité de charnières (1), dans un espace intermédiaire formé entre la surface latérale dudit corps (2) et ladite plaque (6) dans une région entre deux points de soudure qui raccordent ledit corps (2) à ladite plaque (6) et qui forment une paire de ponts (3a, 3b) qui font radialement saillie dudit corps (2) sur une même génératrice et à proximité des extrémités fermée et ouverte dudit corps (2), ladite au moins une bande (11) ayant une coupe transversale rectangulaire dans ledit espace intermédiaire entre lesdits ponts (3a,3b) et ledit corps (2) et ladite plaque (6).

2. Dispositif de chargement supportant les charnières selon la revendication 1, **caractérisé en ce que** ladite au moins une bande (11) est insérée dans ledit espace intermédiaire afin d'aménager côte-à-côte une pluralité desdites charnières (1), qui sont donc agencés en séquence l'une par rapport à l'autre.

3. Dispositif de chargement supportant les charnières selon la revendication 1, **caractérisé en ce que** ladite au moins une bande (11) est formée de papier et/ou de carton et/ou de matière plastique.

4. Dispositif de chargement supportant les charnières selon la revendication 1, **caractérisé en ce que** ladite au moins une bande (11) porte, à une extrémité, un élément (11a) qui est à même de faciliter son extraction, notamment une patte et/ou une ou plusieurs agrafes métalliques ou une région plus épaisse du matériau.

5. Dispositif de chargement supportant les charnières selon la revendication 1, **caractérisé en ce que** ladite au moins une bande (11) porte, à une extrémité, une découpe inclinée (11b) qui est à même de faciliter son insertion dans ledit espace intermédiaire ménagé entre ledit corps (2) et ladite plaque (6) dans la région de raccordement mutuel.
